Europäisches Patentamt

European Patent Office

Office européen des brevets

(11) Publication number: **0 068 772**
**A1**

(12) **EUROPEAN PATENT APPLICATION**

(21) Application number: **82303209.9**

(22) Date of filing: **18.06.82**

(51) Int. Cl.³: **B 60 P 3/12**

(30) Priority: **20.06.81 GB 8119079**

(43) Date of publication of application: **05.01.83**
Bulletin 83/1

(84) Designated Contracting States: **BE DE FR GB IT NL SE**

(71) Applicant: **Chapman, Arthur John, Roman Spring Farm South Chailey, Lewes East Sussex (GB)**

(72) Inventor: **Chapman, Arthur John, Roman Spring Farm South Chailey, Lewes East Sussex (GB)**

(74) Representative: **Kirby, Harold Douglas Benson et al, G.F. Redfern & Company Marlborough Lodge 14 Farncombe Road, Worthing West Sussex BN11 2BT (GB)**

(54) Improvements in or relating to trailers.

(57) The invention relates to a vehicle transporting trailer which may also be used to raise the vehicle above ground level. The trailer comprises a main framework (1) having tracks (2 and 3) for receiving the vehicle wheels. A drawbar (10) is pivotally connected to the underside of the main framework near the fore-and-aft centre thereof. A support frame (21) is also pivotally mounted on the underside of the main framework (1) at a point near to the rear end thereof. The support frame carries road wheels (28 and 29). The angular relationship between the framework (1) and the drawbar (10) can be adjusted by means of a screw-jack (45). The drawbar (10) is connected to the support frame (21) through a pair of linkages comprising bell-crank levers (34 and 35), struts (36 and 37) and levers (32 and 33). The linkages also include detachable links (41). When the detachable links are connected, angular movement of the drawbar (10) relative to the framework (1) causes greater angular movement between the support frame (21) and the main framework (1). As a result, the main framework is raised substantially parallel to the ground. If the detachable links are disconnected, on the other hand, the screw-jack can be used to tilt the main framework (1) relative to the ground so that a vehicle can be loaded on to, or off, the framework.

1

## IMPROVEMENTS IN OR RELATING TO TRAILERS:

This invention relates to trailers for transporting vehicles, and provides a trailer which may also be used to raise the vehicle above ground level.

Trailers are already known which are specifically designed to enable a vehicle to be loaded thereon and off-loaded therefrom so that the vehicle can be transported by means of a further power-driven vehicle. Such trailers may be used, for example, to transport wheeled vehicles which are not capable of being driven on their own wheels either as a result of an accident or because of a breakdown. They may also be used to transport along roads vehicles which are not designed themselves to travel on roads. This applies, for example, to tracked vehicles and special vehicles designed for cross-country work and the like.

It is also known in garages and workshops to provide hydraulically controlled lift means for elevating vehicles above ground level in order to facilitate adjustments and repair work to the underside of the vehicle.

It is a specific object of the present invention to enable a trailer to be used also for elevating a vehicle above ground level in the same manner as a hydraulic lift.

2

From one aspect the invention consists in a trailer for transporting a vehicle comprising a framework having members for receiving the vehicle wheels;  a drawbar extending forwardly of the front end of the framework and pivotally connected to said framework at a point to the rear of said front end thereof; road wheels mounted in the vicinity of one end of a support frame, the other end of which is pivotally connected to the framework in the vicinity of the rear end thereof; control means for varying the angular position of the drawbar relative to the framework; and linkage means interconnecting the drawbar and the support frame so that, as the drawbar is rotated about its pivot axis by said control means, said support frame is rotated about its pivot axis by said linkage means.

Preferably the fore-and-aft length of the drawbar is greater than the fore-and-aft length of the support frame.  In this case, the linkage must be arranged so that, as the drawbar is rotated about its pivot axis by said control means through a given angle, the support frame will be rotated about its pivot axis through an angle which is greater than said given angle.  For example, if the length of the drawbar is substantially twice the length of the support frame, it will be necessary for the angle through which the support frame is rotated to be approximately three times the angle through which the drawbar is rotated.

3

When the trailer is being used on the road, the draw-bar is substantially parallel with the framework as also is the support frame. The means for attaching the trailer wheels to the support frame are arranged to be such that, under these conditions, the framework is substantially horizontal when the draw-bar is attached to the vehicle by means of which it is to be drawn.

When a vehicle is to be loaded on to or off the trailer, the linkage means is disconnected. Under these conditions, the control means may be used to adjust the angular position of the draw-bar and the framework so that the rear of the framework is lowered to ground level. Under these conditions, a vehicle may be loaded on to, or removed from, the framework either under its own power or by means of a winch located in the region of the forward end of the framework.

It is to be understood that, under these conditions, the weight of the vehicle is carried by the front end of the draw-bar, which may either be attached to the tractor vehicle, or may rest on the ground and the rear end of the framework which will rest on the ground. However, it is desirable that stop means be provided between the support frame and the framework so that the support frame cannot be rotated about its pivot axis relative to the framework beyond the position in which the support frame is parallel to the framework. The geometry of the arrangement will then be arranged so that some of the weight of the vehicle to be transported is taken by the trailer wheels.

4

After a vehicle has been loaded, the control means are operated to cause the draw-bar and the framework to be moved into the position in which they are parallel. As already stated, under these conditions, when the draw-bar is attached to the tractor vehicle, the framework is substantially horizontal. Under these conditions also, the majority of the weight of the vehicle to be transported is carried by the trailer road wheels through the stop means. Furthermore, since under these conditions both the draw-bar and the support frame are parallel to the framework, the linkage means can be reconnected.

When the trailer is to be used for elevating a vehicle loaded thereon, the control means are used to rotate the draw-bar about its pivot axis relative to the framework with the linkage means connected. Under these conditions, the linkage means also cause the support frame to rotate about its pivot axis. The geometry of the linkage is arranged so that the support frame can be rotated through substantially 90° until it is perpendicular to the framework. This angular rotation of the support frame will be produced by rotation of the draw-bar through between 30° and 45°. The weight of the vehicle will be carried during this operation by the trailer road wheels, and by the front end of the draw-bar. For this purpose, the front end of the draw-bar will be provided with a ground-engaging shoe. Furthermore, the trailer road wheels are preferably attached to the support frame by means of a trailing suspension, and the arrangement will be such that, when the support frame reaches its vertical position, the weight of the vehicle will be transferred from the road wheels to the support frame itself.

5

Preferably the support frame is in the form of a rectangular sub-frame having two fore-and-aft arms; a forward lateral arm designed for ground-engagement when the frame is in the **vertical** position; and a rear pivot shaft interconnecting the two fore-and-aft arms.

Preferably the linkage includes a bell-crank lever pivotally mounted on the framework, a lever arm fixed to the support frame and rotatable therewith about the pivot axis of the support frame. One arm of the bell-crank and the lever arm are interconnected by a fore-and-aft strut such that the two members are constrained to rotate through substantially equal angles. The other arm of the bell-crank is connected to the draw-bar through a detachable link. The point on the draw-bar at which the detachable link is connected is intermediate the draw-bar pivot point and the point at which the control means is attached, and is chosen so that the angular rotation of the bell-crank is approximately double the angular rotation of the draw-bar. Thus, as already mentioned, the support frame may be rotated from a substantially horizontal position to a substantially vertical position by moving the draw-bar from a substantially horizontal position to an inclined position in which it makes an angle with the framework of between 30° and 45°.

6

In accordance with normal practice, the trailer framework preferably consists of two tracks with an open centre except for cross-bracing. Also in accordance with normal practice, the draw-bar is preferably in the form of an open frame - normally an A-shaped frame - the rear end of the draw-bar being pivotted in the vicinity of the fore-and-aft centre of the trailer.

As already mentioned, the control means is preferably in the form of a screw-jack since, in this case, it is unneccessary to provide any further locking means to ensure that the trailer is stable in its elevated position. If the control means take any other form, it is desirable that some form of lock should be provided to ensure that the support frame cannot be moved from the position in which it is perpendicular to the trailer framework.

Preferably two wheels are provided for the trailer but, if the trailer is designed for particularly heavy vehicles, four or more wheels may be provided, at least two being mounted by suitable suspension means at, or near, the forward end of the support frame. When the support frame is parallel to the framework, the wheels are located at, or near, the fore-and-aft centre of the trailer. Thus if there are only two wheels, the wheel axles will be substantially at the fore-and-aft centre, whereas, if there are four wheels, the axles will be spaced equally in front of, and to the rear of, the fore-and-aft centre. If there are more than two wheels, the additional wheels may be mounted on the support frame, the drawbar, or the framework.

From another aspect the invention consists in any features of novelty, taken singly or in combination, of the trailer shown in the accompanying diagrammatic drawings.

7

One method of performing the invention will now be described with reference to the accompanying diagrammatic drawings, in which:-

Figure 1 is a plan view of a trailer in accordance with the invention;

Figure 2 is a side view of the trailer illustrated in Figure 1 showing the relative position of the parts when the trailer is to be used for transporting a vehicle;

Figure 3 is a side view showing the trailer in the position for loading or unloading a vehicle; and

Figure 4 is a side view of the trailer in the elevated position.

The trailer illustrated includes a framework 1 consisting of two tracks 2 and 3 joined by cross members 4, 5 and 6. The two tracks are preferably provided with upstanding flanges extending along their complete length. The exterior flanges are not particularly illustrated in the drawings, but two interior flanges are shown at 7 and 8.

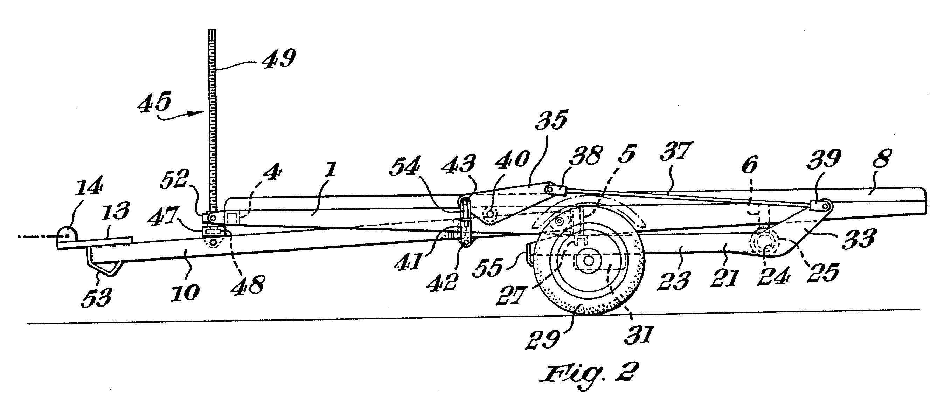

The trailer also includes a drawbar 10. This drawbar is generally in the form of an A-shaped frame including two main members 11 and 12 which are joined at the forward end by a plate 13. At the forward end of the plate is a towing hitch diagrammatically illustrated at 14 which may be of any required form in accordance with the connection provided on the towing vehicle. The rearward ends of the two members 11 and 12 are bifurcated as indicated at 15 and 16. The rear ends of the two bifurcated portions are pivotally connected to the respective tracks 2 and 3. The pivot connection may include two plates 17 and 18 welded to the cross member 5 and

8

to the undersides of the respective tracks 2 and 3. Pivot pins 19 and 20 pass through holes in the sides of the tracks 2 and 3, the bifurcated arms of the drawbar, and the plates 17 and 18. It will be understood that, in some cases, it may be preferable to locate the plates 17 and 18 at the inner ends of the pivot points 19 and 20 instead of between the bifurcated arms of the drawbar. It is further to be understood that some form of jacking means will be provided at the forward end of the drawbar to assist in attaching the drawbar to the towing vehicle hitch connection. The jacking means may be in the form of the conventional jockey wheel, but preferably are in the form of a shoe hinged at the forward end of the drawbar and rotatable about this hinge by means of a hydraulic or screw jack so that the trailing end of the shoe engages the ground. A non-adjustable shoe is indicated at 53 in Figures 2, 3 and 4 but, if the hinged shoe is used, it would, of course, extend further to the rear than indicated in the drawing.

The trailer also includes a support frame 21 which includes two fore-and-aft arms 22 and 23. The rear ends of the two arms 22 and 23 are interconnected by a tube 24 which is rotatable within bearings 25 and 26 attached to the underside of the tracks 2 and 3 immediately below the rear cross member 6. In the vicinity of their forward ends, the two arms 22 and 23 are interconnected by a cross member 27. Shoes which are designed for ground-engagement when the arms 22 and 23 are in the vertical

9

position are provided on the forward ends of these arms. The shoe on the arm 23 can be seen at 55 in Figures 2, 3 and 4. Two road wheels 28 and 29 are mounted on the respective arms 22 and 23 by means of trailing suspensions which are indicated diagrammatically at 30 and 31.

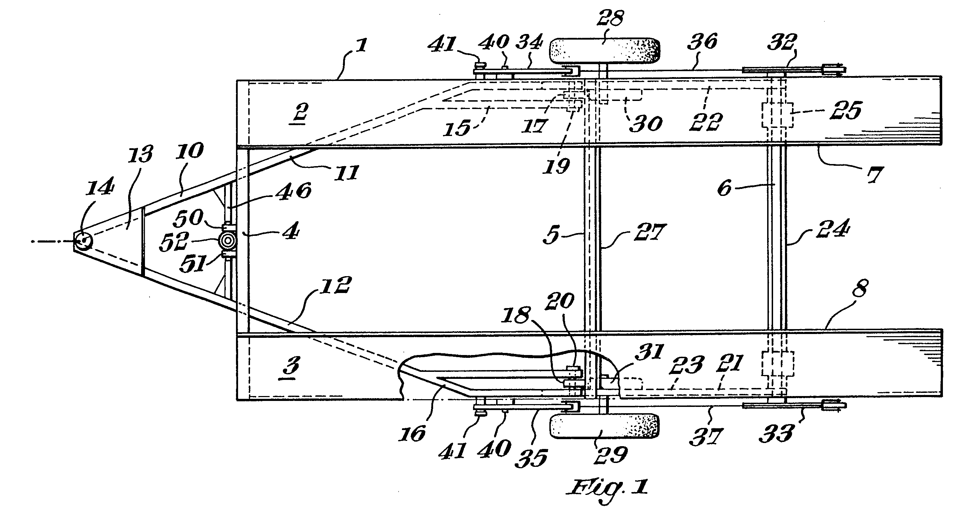

Fixed to the outer ends of the tube 24 are two levers 32 and 33. These levers are secured so that they rotate with the respective arms 22 and 23 about the axis of the tube 24, and packing pieces may be welded between the arms and the levers to give extra strength. A pair of bell-crank levers 34 and 35 are pivotally mounted on the respective tracks 2 and 3. The levers 32 and 33 are respectively coupled to the bell-crank levers 34 and 35 by struts 36 and 37. As is more clearly illustrated in Figures 2, 3 and 4, the two ends of the strut 37 are provided with coupling members 38 and 39 which are respectively pivotally connected to the end of the bell-crank lever 35 more remote from its pivot point 40 and to the free end of the lever 33. The connections between the strut 36 and the bell-crank lever 34 and the lever 32 are, of course, similar. The main portions of the struts 36 and 37 are indicated in Figure 1 only by single lines for the purpose of clarity.

10

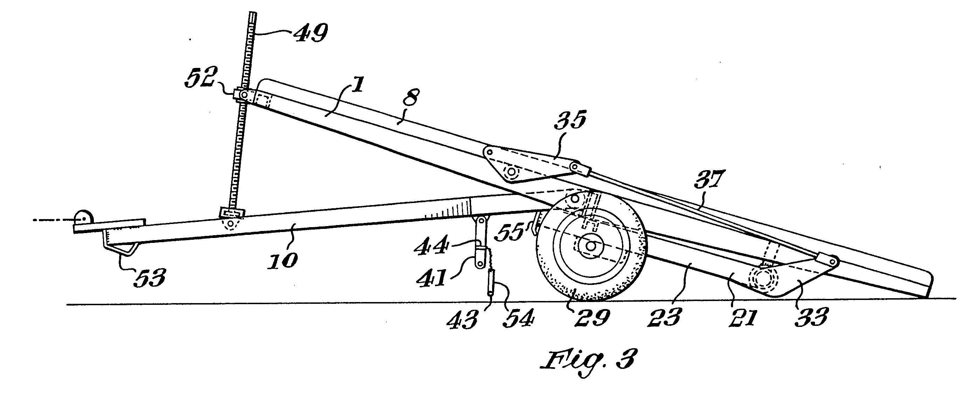

The ends of the two bell-crank levers 34 and 35 closer to the pivot points are connected to the drawbar 10 through respective detachable links. As illustrated, particularly in Figure 3, each of these links may comprise a link member 41 pivotally mounted on the drawbar 10, for example, by means of a trunnion 42. The end of the link member 41 remote from the trunnion 42 may be pivotally connected to the bell-crank lever 35 by means of a removable pivot pin 43. Each pivot pin includes a flat handle 54 extending at right angles to one end thereof and a locking member 44 may be provided on the link member 41 to cooperate with the handle to hold the pivot pin 43 in position when the link member is connected to the bell-crank lever.

The angular relationship between the drawbar 10 and the main load-bearing framework 1 can be varied by means of a screw jack 45. The two arms 11 and 12 of the drawbar 10 are interconnected by a cross member 46 on which is pivotally mounted a block 47. This block is designed to hold captive a circular plate 48 on the lower end of the threaded shaft 49 of the screw jack. The arrangement is such that the plate 48 is rotatable in the block 47 about the axis of the shaft 49, but is substantially prevented from axial movement relative thereto. Mounted on the cross member 4 are a pair of trunnions 50 and 51 pivotally supporting a nut 52.

11

The shaft 49 passes through the nut 52 in threaded engagement therewith. Accordingly, rotation of the shaft 49 about its axis causes the nut 52 to move along the length of the shaft and thus alter the angular position of the drawbar 10 relative to the main framework 1.

As can be seen from Figures 1 and 2, when the trailer is being used on the road, the nut 52 is substantially at its lowermost position on the shaft 49. Under these conditions the main framework 1 is substantially horizontal when the drawbar is attached to the towing vehicle. The bell-crank lever 35 is connected to the drawbar 10 by means of the detachable links. Thus the relative positions of the support frame 21 and the main framework 1 is fixed, apart from any play in the linkage. Preferably, however, stop means (not illustrated) are provided to limit angular movement in the anticlockwise direction as seen in Figures 2, 3 and 4 of the support frame 21 relative to the main framework 1. Thus, under these conditions, the main weight of the vehicle loaded on the trailer is passed to the support frame 21 by the stop means rather than through the linkage. In addition it is, of course, to be understood that the trailing suspensions 30 and 31 for the road wheels 28 and 29 will normally incorporate springing, and possibly also shock-

12

absorbers. As shown in Figure 2, movement of the forward end of the framework 1 towards the drawbar 10 is limited by the screw jack. However, it is to be understood that the framework may actually rest on the drawbar when the jack is fully lowered. If desired, resilient blocks may be provided between the two members. Similarly angular movement between the framework and the support frame may be limited by the framework resting directly on the support frame. However, once again, if desired resilient blocks or pads may be provided between the two members.

When a vehicle is to be loaded on to or off the trailer, the detachable link is disconnected. Under these conditions, rotation of the shaft 49 in the direction necessary to cause the nut 52 to move upwardly will cause the main framework 1 to rotate in a clockwise direction as seen in Figure 2 relative to the drawbar 10. Assuming that the drawbar 10 is hitched on to the towing vehicle, this movement will cause the rear of the main framework 1 to be lowered to ground level as shown in Figure 3. A vehicle may then be loaded on to or removed from the trailer either under its own power or by means of a winch (not illustrated) located in the region of the forward end of the framework 1. As can be seen from Figure 3, because the linkage is disconnected, the relative positions of the main framework 1 and the support frame 21 are substantially the same as in the towing position illustrated in Figure 2. Thus

13

part of the weight of the vehicle being loaded is taken by the road wheels, although parts of this weight are also taken by the towing vehicle through the hitch connection and by the rear of the framework 1 resting on the ground.

It is to be understood that, after a vehicle has been loaded, the shaft 49 is rotated in the direction necessary to cause the nut 52 to travel down the shaft until it reaches the position shown in Figure 2. The detachable link may then be reconnected, and the loaded vehicle transported as required.

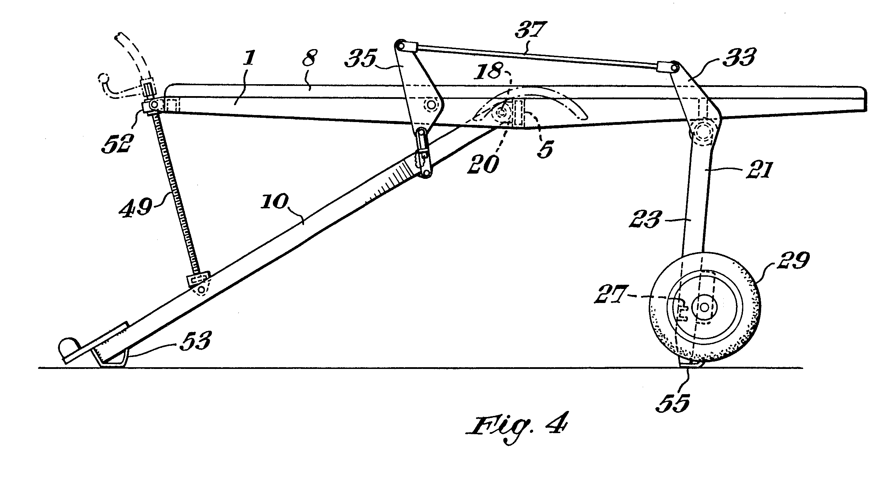

When the trailer is to be used for elevating a vehicle loaded thereon, the trailer will normally be detached from the towing vehicle so that the ground-engaging shoe 53 provided at the forward end of the drawbar will rest on the ground. The rod 49 is then rotated with the detachable links connecting the drawbar 10 to the bell-crank levers 34 and 35. As the shaft 49 is rotated to cause the nut 52 to travel upwardly, the bell-crank levers 34 and 35 are rotated in an anticlockwise direction until they reach the position illustrated in Figure 4. The links 36 and 37 cause similar anticlockwise rotation of the levers 32 and 33 . Rotation of the levers 32 and 33 causes similar rotation of the support frame 21. The geometry of the trailer is arranged so that, during this

14

elevating movement, the main framework 1 remains substantially parallel to the ground. When elevation is completed so that the support frame 21 reaches the substantially vertical position shown in Figure 4, the wheels 28 and 29 cease to rest on the ground, and the weight of the elevated vehicle applied to the support frame 21 is taken by the ground-engaging shoes on the forward ends of the fore-and-aft members 22 and 23.

As already mentioned, and as can be seen from Figure 4, the geometry of the linkage is arranged so that angular rotation of the drawbar 10 relative to the main framework 1 through a given angle causes relative rotation between the support frame 21 and the main framework 1 through a greater angle. In the particular arrangement shown, rotation of the drawbar through an angle of about 30° produces angular rotation of the support frame 21 through 90°. This particular relationship is necessary because the fore-and-aft length of the drawbar is approximately twice the fore-and-aft length of the support frame.

It will be noted that, as the main framework is elevated, the wheels 28 and 29 are drawn closer to the shoe 53. This may result from movement on the ground of either the wheels or the shoe. As already stated, during the last part of the elevating movement, rear support for the main framework is transferred from the wheels to the shoes. This arrangement has a particular advantage in that, when elevation commences and the load on the jacking system is greatest, the length of the lever arm between the axis of the tube 24 and the ground is less than the length of this lever arm when elevation is nearly complete and the load on the jack has been reduced.

15

CLAIMS:

1. A trailer for transporting a vehicle comprising a framework having members for receiving the vehicle wheels; a drawbar extending forwardly of the front end of the framework and pivotally connected to said framework at a point to the rear of said front end thereof; road wheels mounted in the vicinity of one end of a support frame, the other end of which is pivotally connected to the framework in the vicinity of the rear end thereof; control means for varying the angular position of the drawbar relative to the framework; and linkage means interconnecting the drawbar and the support frame so that, as the drawbar is rotated about its pivot axis by said control means, said support frame is rotated about its pivot axis by said linkage means.

2. A trailer as claimed in Claim 1, wherein the fore-and-aft length of the drawbar is greater than the fore-and-aft length of the support frame, and wherein, as the drawbar is rotated about its pivot axis by said control means through a given angle, the support frame is rotated about its pivot axis through an angle which is greater than said given angle.

3. A trailer as claimed in Claim 2, wherein the length of the drawbar is substantially twice the length of the support frame, and wherein the angle through which the support frame is rotated is substantially three times the angle through which the drawbar is rotated.

16

4.        A trailer as claimed in any of the preceding Claims, wherein the control means is in the form of a jack extending between the front end of the framework and a point to the rear of the front end of the drawbar.

5.        A trailer as claimed in Claim 4, wherein, when the drawbar is substantially parallel to the framework, the said point on the drawbar is in the immediate vicinity of the front end of the framework.

6.        A trailer as claimed in Claim 4 or Claim 5, wherein the jack is in the form of a screw-jack driven manually, electrically or hydraulically.

7.        A trailer as claimed in any of the preceding Claims, wherein stop means are provided between the support frame and the framework so that the support frame cannot be rotated about its pivot axis relative to the framework beyond a position in which the support frame is parallel to the framework.

8.        A trailer as claimed in any of the preceding Claims, wherein the support frame is in the form of a rectangular sub-frame having two fore-and-aft arms, a forward lateral arm, and a rear pivot shaft.

9.        A trailer as claimed in Claim 8, wherein the forward ends of the two fore-and-aft arms are designed for ground-engagement when the frame is in the vertical position.

17

10.      A trailer as claimed in any of the preceding Claims, wherein the linkage includes a pair of bell-crank levers pivotally mounted on the framework and a pair of lever arms fixed to the support frame and rotatable therewith about the pivot axis of the support frame.

11.      A trailer as claimed in Claim 10, wherein one arm of each bell-crank lever is connected to the respective lever arm by a fore-and-aft strut such that the two members are constrained to rotate through substantially equal angles.

12.      A trailer as claimed in Claim 11, wherein the other arm of each bell-crank lever is connected to the drawbar through a detachable link.

13.      A trailer as claimed in Claim 12, wherein the point on the drawbar at which the detachable link is connected is intermediate the drawbar pivot point and the point at which the control means is attached so that the angular rotation of the bell-crank is between two and three times the angular rotation of the drawbar.

14.      A trailer as claimed in Claim 3 and Claim 13, wherein the distance between the drawbar pivot point and the point on the drawbar at which the respective detachable link is connected is substantially three times the distance between the respective bell-crank pivot point and the point on the bell-crank at which the detachable link is connected.

Fig. 1

1/4

0068772

Fig. 2

Fig. 3

Fig. 4

0068772

# 0068772

European Patent Office

**EUROPEAN SEARCH REPORT**

Application number

EP 82 30 3209

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 039 633 (MINDRUM) <br> * the whole document * | 1 | B 60 P 3/12 |
| X | FR-A-1 500 599 (BUCHER-GUYER) <br> * abstract * | 1 | |
| A | DE-A-2 909 070 (SCHMIDT) <br> * figure 3; page 8 * | 1 | |
| A | GB-A-1 442 387 (WAREING) <br> * the whole document * | 1,9 | |
| A | FR-A-2 388 695 (TRIGG) <br> * the whole document * | 1 | |
| P | GB-A-2 075 928 (TRIGG) <br> * the whole document * | 1 | TECHNICAL FIELDS SEARCHED (Int. Cl. ³) |
| P | EP-A-0 049 637 (RICHFORD) <br> * the whole document * | 1 | B 60 P <br> B 62 D <br> B 60 D |
| E,P | US-A-4 317 593 (SARVELA) <br> * the whole document * | 1,9 | |
| A | FR-A-2 357 401 (PETIT) | | |
| A | US-A-2 766 050 (STONE) | | |

The present search report has been drawn up for all claims

| Place of search <br> THE HAGUE | Date of completion of the search <br> 17-09-1982 | Examiner <br> SCHMITTER J.M. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82